# EUROPÄISCHE PATENTSCHRIFT

(11) **EP 1 216 849 B1**
(45) Veröffentlichungstag und Bekanntmachung des Hinweises auf die Patenterteilung: **18.08.2004**
(21) Anmeldenummer: 01811167.4
(22) Anmeldetag: 03.12.2001
(51) Int. Cl.: B60B 21/06, B60B 1/04, B60B 1/00

(54) **Gespeichtes Fahrrad-Rad**
Spoked wheel for bicycle
Roue à rayons pour bicyclette

(30) Priorität: 22.11.2001 CH 215101; 19.12.2000 CH 247600
(43) Veröffentlichungstag der Anmeldung: 26.06.2002
(73) Patentinhaber: Krampera, Jiri, CH-8003 Zürich (CH)
(72) Erfinder: Krampera, Jiri, CH-8003 Zürich (CH)
(74) Vertreter: Frei, Alexandra Sarah

(56) Entgegenhaltungen:
- EP-A- 0 841 549
- EP-A- 1 201 458
- FR-A- 2 736 869
- FR-A- 2 792 250
- US-A- 5 228 756

## Beschreibung

### STAND DER TECHNIK

Die Erfindung betrifft ein exzentrisch gespeichtes Fahrradrad, dessen Speichensystem im Axialschnitt des Rades eine Schüsseltiefe (amount of dish) aufweist, sodass die Speichenspannungen an beiden Radseiten unterschiedlich sind. (Ähnliches Thema behandelte der Erfinder schon vorher in seinen Patenten "Felge für ein gespeichtes Fahrrad-Hinterrad".) Dieses Rad ist in einem Fahrrad als Vorderrad oder Hinterrad verwendbar.

Ein solches konventionelles Fahrrad-Vorderrad hat eine Vorderradnabe, die in der Gabel des Fahrradrahmens befestigt ist und an deren einen Seite z.B. eine Bremsscheibe als Bestandteil einer Scheibenbremse angebracht ist. Ein solches konventionelles Fahrrad-Hinterrad hat eine Hinterradnabe, die in dem Fahrradrahmen befestigt ist und an deren einen Seite ein Zahnkranzsatz für die antreibende Kette befestigt ist. Die Nabenflansche an den Seiten der Vorder- und der Hinterradnabe sind mit einer konventionellen, einen Reifen tragenden Felge durch Speichen unter Spannung verbunden.

In einem Hinterrad verursacht der Zahnkranzsatz eine unerwünschte seitliche Versetzung der Mittelebene der Nabenflansche von der Felgenmittelebene in Richtung zur Zahnkranzgegenseite. Durch diese mehrere Millimeter grosse Versetzung, welche als Schüsseltiefe bekannt ist, wird die Spannung der zahnkranzseitigen Speichen grösser als die Spannung der zahnkranzgegenseitigen Speichen in einem Masse, dass die Dauerhaftigkeit des Hinterrades stark vermindert wird. Es ist darum wünschenswert die Speichenspannungen des Hinterrades soweit wie möglich auszugleichen.

Bei einem Vorderrad ist die seitliche Versetzung der Mittelebene der Nabenflansche durch die seitliche Befestigung der Bremsscheibe an der Nabe verursacht und auch hier ist der Ausgleich der Speichenspannungen an beiden Radseiten erstrebenswert.

Jedem Fachmann ist heute folgendes Problem bei dem konventionellen Fahrrad-Hinterrad bekannt. Ein Hinterrad mit heute 8 bis 10 Zahnkränzen, bei dem an der Zahnkranzseite des Rades die Speichenspannung um etwa 100 % und mehr (!) grösser ist als an der anderen Radseite, kann keine wünschenswerte durchschnittliche Spannung aller Speichen erhalten. Dies um so mehr, als die Unterschiede in den Spannungen einzelner Speichen an einer Radseite im Vergleich mit dem Durchschnittswert bekanntlich etwa ± 200 bis 300 N betragen. Das Resultat ist ein Hinterrad, das sehr oft nachzentriert werden muss, da sich einzelne Nippel der zu lockeren Speichen an der Zahnkranzgegenseite des Rades im Betrieb selbsttätig lockern. Die hoch gespannten Speichen an der Zahnkranzseite können jedoch nicht genügend nachgespannt werden, um den Speichen an der Zahnkranzgegenseite zu einer höheren Spannung zu verhelfen, da ihre Nippel z.B. beim gewaltigen Nachspannen mit dem Zentrierschlüssel in zwei Teile zerrissen werden oder ihr Vierkant abgerissen wird. Ausserdem brechen im Betrieb durch Ermüdung fast immer nur die Speichen an der Zahnkranzseite. Folglich sind alle konventionellen Hinterräder auch bei sehr teuren Rennrädern minderwertig.

Heute sind bei exzentrisch gespeichten Fahrrad-Rädern unzählige Speichenordnungen, die verschiedenste Vorteile bringen sollen, bekannt. Alle Systeme haben aber eine gemeinsame Eigenschaft: Die Anzahl der Speichen, die von einem Nabenflansch zur Felge führen, ist die gleiche, wie die Anzahl der Speichen, die von dem Flansch an der anderen Seite der Nabe zur Felge führen. Es ist gerade diese Eigenschaft, die dazu führt, dass bei. einem exzentrisch gespeichten Rad die durchschnittlichen Spannungen der Speichen an beiden Radseiten zwangsläufig unterschiedlich sein müssen.

In den letzten Jahren hat man gegen unterschiedliche Spannungen der Speichen an beiden Radseiten verschiedenes unternommen. Man hat beispielsweise asymmetrische Felgen mit seitlich versetzten Speichenverankerungen entworfen im europäischen Patent EP 494 277 A (& US 5 228 756 A, JP 3 111 074 B). Durch diese Lösungen wurden die Speichenspannungen an beiden Radseiten wesentlich ausgeglichener. Wie verschiedene Teste der Lizenznehmer bezeugen, sind Räder mit solchen Felgen widerstandsfähiger als Räder mit konventionellen Felgen. Zur Zeit werden Laufräder mit solchen Felgen für Fahrrad-Hinterräder mit mehreren Zahnkränzen und auch für Vorderräder mit Bremsscheiben verwendet.

Ein exzentrisch gespeichtes Fahrradrad ist aus der gattungsgemäßen FR 2 792 250 A bekannt. Gemäß den Figuren 3 und 4 dieser Patentschrift ist die Anzahl der Speichen an beiden Radseiten unterschiedlich, und sind die Distanzen zwischen den Verankerungsstellen der Speichen in der Felge nicht gleich groß, was zu unwucht führen kann.

### ZUSAMMENFASSUNG DER ERFINDUNG

Es ist die Aufgabe der vorliegenden Erfindung ein exzentrisch gespeichtes Fahrrad-Rad zu schaffen, welches, verglichen mit einem konventionellen exzentrisch gespeichten Rad mit gleicher Schüsseltiefe, gleicher Nabe, gleicher Felge und gleicher Anzahl der Speichen fast oder sogar genau gleiche Spannungen der Speichen an beiden Radseiten aufweist und deshalb viel dauerhafter ist, und kann unwucht aufweist. Diese - auf den ersten Blick nicht durchführbare Aufgabe - wird durch ein gespeichtes Rad mit den kennzeichnenden Merkmalen des Patentanspruches 1 und mit dem Verfahren nach Anspruch 18 auf einfachste Art und Weise gelöst. Dieses Rad hat an jeder Radseite eine andere Anzahl der Speichen nach dem Prinzip: Grössere durchschnittliche Spannung der Speichen an einer Radseite wird durch grössere Anzahl der Speichen an dieser Seite eliminiert. Die restlichen Fragen, ob man so ein Speichensystem in einem Rad überhaupt einspeichen kann und ob man so ein Rad zentrieren kann, werden mit ja beantwortet.

### KURZE BESCHREIBUNG DER ZEICHNUNGEN

Nachfolgend wird anhand der Zeichnungen zuerst die Problematik am Fahrrad-Hinterrad bei Verwendung konventioneller Speichensysteme erklärt. Beim Fahrrad-Vorderrad ist die Problematik analog und wird deshalb nicht behandelt. Nachher werden verschiedene Ausführungsformen der Erfindung im einzelnen erläutert. In schematischen Darstellungen zeigen:
- Fig. 1: einen Teil eines konventionellen exzentrisch gespeichten Fahrrad-Hinterrades in der axialen Schnittansicht nach dem Stand der Technik;
- Fig. 2: ein konventionelles exzentrisch gespeichtes Fahrrad-Vorderrad oder Fahrrad-Hinterrad in der Seitenansicht nach dem Stand der Technik;
- Fig. 3: einen Teil eines exzentrisch gespeichten Fahrrad-Hinterrades in der axialen Schnittansicht ähnlich wie in der Fig. 1 jedoch nach einer Ausführungsform der Erfindung;
- Fig. 4, 5, 7, 8, 9: ein exzentrisch gespeichtes Fahrrad-Vorderrad oder Fahrrad-Hinterrad in der Seitenansicht ähnlich wie in der Fig. 2 jedoch nach verschiedenen Ausführungsformen der Erfindung.
- Fig. 6: eine andere Ausführungsform eines Fahrradrades, die aber kein Teil der Erfindung ist.
- Fig. 10: ein zentrisch gespeichtes Fahrrad- Vorderrad in der Seitenansicht, welches nicht erfindungsgemäss eingespeicht ist.

### DETAILLIERTE BESCHREIBUNG DER VORTEILHAFTEN AUSFÜHRUNGEN DER ERFINDUNG

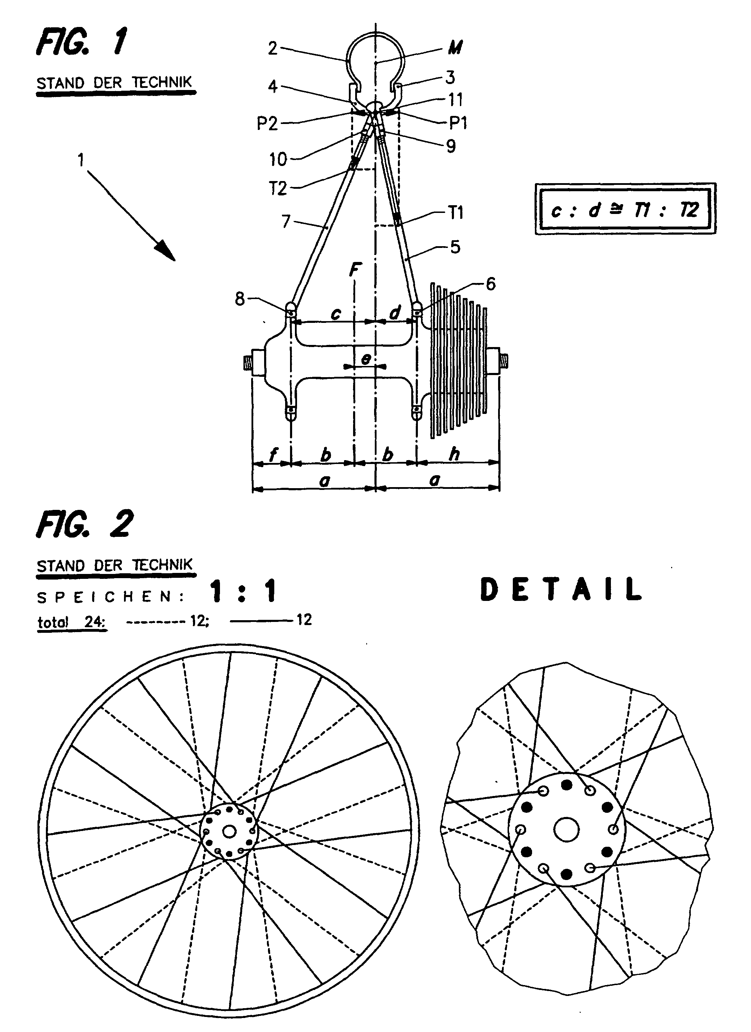

Fig. 1 zeigt einen Teil eines konventionellen exzentrisch gespeichten Fahrrad-Hinterrades 1 in der axialen Schnittansicht nach dem Stand der Technik.

Der Reifen 2 ist auf einer konventionellen Felge 3 mit einem bezüglich der Felgenmittelebene M symmetrischen Querschnitt und einem einfachen Felgenboden 4 befestigt. Heutzutage werden vermehrt Felgen mit doppeltem Felgenboden und mit verschiedensten, auch asymmetrischen Querschnitten verwendet.

Die Felge 3 ist durch zahnkranzseitige Speichen 5 mit dem zahnkranzseitigen Nabenflansch in den Verankerungspunkten 6 und durch zahnkranzgegenseitige Speichen 7 mit dem zahnkranzgegenseitigen Nabenflansch in den Verankerungspunkten 8 verbunden. Die Verankerung der Speichen in den Nabenflanschen erfolgt meistens in den Speichenlöchern, wobei die Speichen am Ende einen rechtwinkligen Bogen mit einem Speichenkopf haben. Aus Gründen der Übersichtlichkeit ist dieses Detail nicht dargestellt. Die Nabenflansche sind durch einen zylindrischen Nabenkörper miteinander verbunden.

Die Verankerung der Speichen in der Felge erfolgt in der Felgenmitte durch Speichennippel 9, 10 in den Punkten 11. Heute befinden sich diese Verankerungsstellen nicht immer in der Felgenmitte und es werden beispielsweise alle Speichen von der Felgenmittelebene M in der zahnkranzgegenseitigen Hälfte der Felge seitlich versetzt verankert. Oder werden die zahnkranzseitigen Speichen in der zahnkranzgegenseitigen Hälfte der Felge verankert und umgekehrt, sodass sich die zahnkranzseitigen und die zahnkranzgegenseitigen Speichen in der axialen Schnittansicht des Rades kreuzen. Das Ziel solcher Systeme ist eine Verbesserung der Seitensteifigkeit des Rades und des Verhältnisses der Speichenspannungen an den Radseiten.

Die Speichennippel 9, 10 sind heute manchmal statt in der Felge in den Nabenflanschen angebracht. Auch sind die Nabenflansche nicht immer ringförmig gestaltet, sondern es werden beispielsweise die in ihrer ganzen Länge geraden Speichen auf dem Umfang der Nabe in verschiedenen zahnförmigen Gebilden verankert, sodass eine Bruchgefahr im Speichenbogen entfällt.

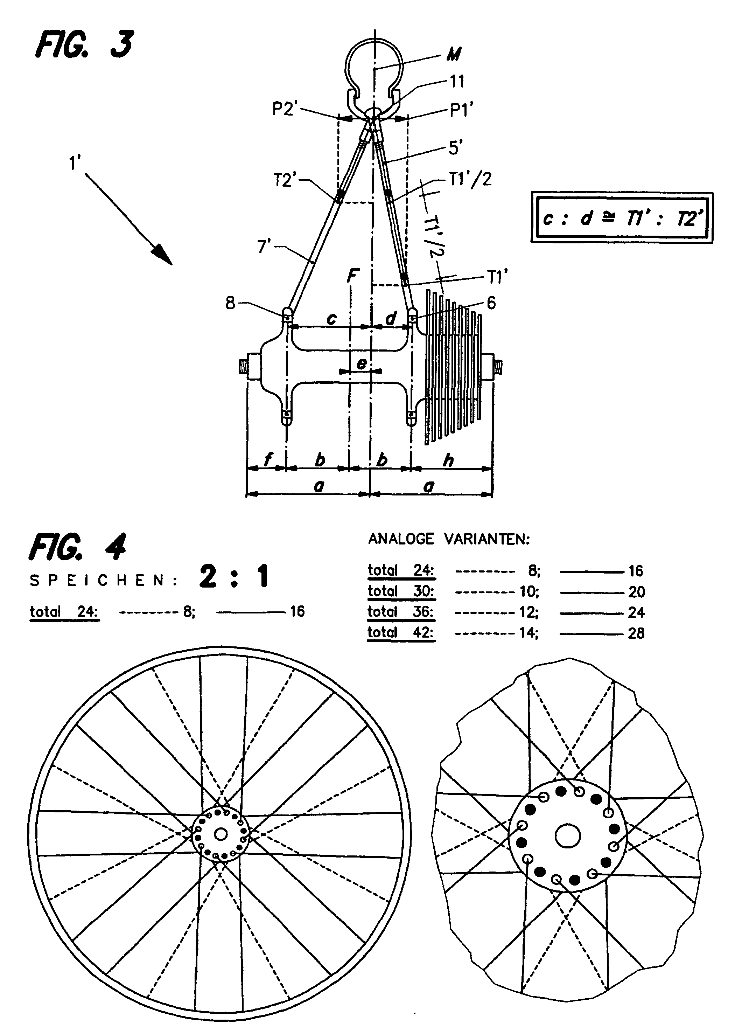

Beim Zentrieren des Rades durch das Drehen der Speichennippel 9, 10 entstehen in den Speichen 5, 7 Spannungen T1, T2, welche das Material der Felge und der Nabe in den Speichenverankerungspunkten 11, 6, 8 auf Druck beanspruchen. Das sehr wichtige Verhältnis der durchschnittlichen Speichenspannungen an beiden Radseiten ist von dem Verhältnis der Winkel zwischen den Speichen 5 , 7 einerseits und der Mittelebene der Verankerungsstellen der Speichen in der Felge andererseits abhängig. In diesem Beispiel (und auch in der Fig. 3) ist die Mittelebene der Verankerungsstellen der Speichen in der Felge identisch mit der Mittelebene der Felge M. (Es ist aber nicht identisch bei Rädern mit seitlich versetzten Verankerungsstellen der Speichen in der Felge.) Die Spannungen der Speichen sind in der Fig. 1 graphisch als Linienabschnitte T1 und T2 dargestellt, welche zueinander im Verhältnis etwa 2 : 1 stehen. Dies führt heute bei sieben- und mehrfachen Zahnkränzen zu einer sehr mangelhaften Seitensteifigkeit des Hinterrades in Richtung von der Zahnkranzseite zur Zahnkranz- Gegenseite des Rades und zur ständiger Lockerung der Speichennippel an der Zahnkranz - Gegenseite. Es ist mathematisch nachweisbar und durch praktische Messungen untermauert, dass das Verhältnis der Speichenspannungen T1 : T2 dem Verhältnis der Masse c : d auf der Nabe ziemlich genau entspricht.

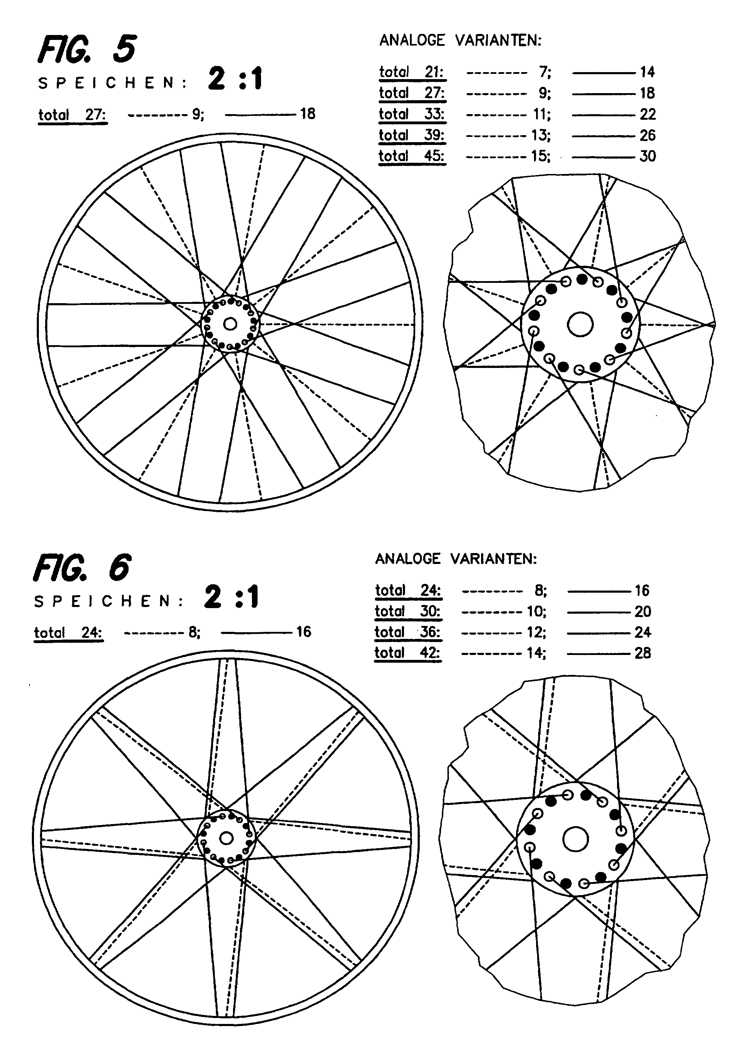

Diese Regel ist immer dann gültig, wenn sich die Verankerungsstellen der Speichen in der Felge in deren Mitte befinden und wenn die Speichen an beiden Radseiten gekreuzt gespeicht sind. Dabei werden die am Ende rechtwinklig gebogenen Speichen in jeden Flansch von beiden Seiten abwechselnd in die Speichenlöcher eingesteckt, sodass sie auch abwechselnd von beiden Seiten aus dem Flansch in Richtung zur Felge herauskommen. Die mechanische Auswirkung dieses Systems des Einspeichens ist solche, als wenn alle Speichen aus jedem Flansch von der Mitte des Speichenloches aus den Punkten 6 und 8 zur Felge geführt werden, wie es vereinfacht in der Fig. 1 dargestellt ist. Die Räder in den Figuren 2 , 4 und 6 haben an beiden Radseiten gekreuzte Speichen. Dies kann man gut ersehen in den Vergrösserungen der Nabenflansche in diesen Figuren. Bei den Figuren 5, 7, 8 und 9 ist es aber anders als in den Fig. 2, 4 und 6 beschrieben wird.

Die Masse c und d kann man einfach messen und das konventionelle Verhältnis der Speichenspannungen errechnen. Dann kann man ein geeignetes Speichensystem mit Hilfe der hier diskutierten Lehre wählen. Das Verhältnis der Speichenspannungen an den Radseiten sollte sich nachher so weit als möglich und/oder so weit als erwünscht dem Verhältnis von 1 : 1 nähern. Die beim Zentrieren des Rades entstehenden horizontalen Kraftkomponenten P1 und P2 der Speichenspannungen T1 und T2 können kleiner oder grösser werden je nach Grösse von T1 und T2, sind aber zwangsläufig bei einem Rad immer gleich gross.

In der Felgenmittelebene M liegen in diesem Beispiel die Verankerungspunkte 11 der Speichennippel 9, 10. (Dies ist aber nicht immer der Fall wie es z.B. das auf Seite 2 unten erwähnte Patent "Felge für ein gespeichtes Fahrrad-Hinterrad" zeigt.) Die Mittelebene der Nabenflansche F ist von der Felgenmittelebene M in Richtung zur Zahnkranzgegenseite der Nabe um das Mass e seitlich verschoben, wodurch das Speichensystem eine exzentrische Form bekommt. Das Mass e = (h - f) : 2 ist die eigentliche unerwünschte Schüsseltiefe (amount of dish) des Speichensystems und die Ursache der Unvollkommenheit des Rades.

Ergänzend soll gesagt werden, dass bei einem konventionellen Fahrrad-Vorderrad ohne eine Bremsscheibe das Speichensystem zentrisch ist, sodass die Ebenen M und F identisch sind und keine Schüsseltiefe e entsteht. Solche Räder haben die gleiche Speichenspannung an beiden Seiten, sodass c = d und T1 : T2 = 1 : 1. Dies ist der Idealfall und diese Räder sind im Betrieb um das Mehrfache dauerhafter als die gespeichten Räder mit einem exzentrischen Speichensystem.

Fig. 2 zeigt ein konventionelles exzentrisch gespeichtes Fahrrad-Vorderrad oder Fahrrad-Hinterrad in der Seitenansicht nach dem Stand der Technik. Das Hinterrad 1 dieser Art wurde gezeigt in der axialen Schnittansicht in der Fig. 1. Auf die Darstellung des Reifens, des Zahnkranzes oder der Bremsscheibe wurde verzichtet, um nur das Wesentliche zu zeigen.

Das Rad hat insgesamt 24 Speichen und sie sind an beiden Radseiten zweimal gekreuzt. Die Speichen der dem Betrachter zugewendeten Radseite sind durch volle Striche dargestellt, die Speichen an der anderen Radseite sind gestrichelt. Die beidseitige Kreuzung der Speichen dient der besseren Übertragung des durch den Kettenantrieb oder den Bremsvorgang entstehenden Drehmomentes von beiden Flanschen der Nabe durch die Speichen auf die Felge. Diese zusätzliche Zugbelastung ist somit auf mehr Speichen verteilt als wenn ein Flansch nur radiale Speichen hat, welche kein Drehmoment übertragen können (bei sogenannten Hybrid - Laufrädern). Ein Detail des Flansches macht die Speichenführung besser sichtbar. Ein ähnliches Detail ist auch in den Fig. 4, 5, 6, 7, 8, 9 und 10 zu sehen.

Das Wichtigste zu überlegen, ist die Tatsache, dass die Anzahl der Speichen gemäss dieser Figur an jeder Radseite gleich ist und in diesem Beispiel 12 beträgt und somit das Speichenanzahlverhältnis der Speichen 5 zu den Speichen 7 1 : 1 ist. Obwohl heute bei Fahrrädern unzählige Speichenbespannungssysteme existieren, bleibt dieser Grundsatz bei jedem konventionellen gespeichten Rad erhalten. Die Anzahl der Speichen an beiden Radseiten ist gleich. Wenn dabei das durchschnittliche Speichenspannungsverhältnis T1 : T2 etwa 2 : 1 beträgt, wie in der Fig.1 graphisch dargestellt ist, dann muss durchschnittlich jede Speiche an der Zahnkranz- oder Scheibenbremsenseite des Rades einer zweimal grösseren Spannung widerstehen als jede Speiche an der anderen Radseite. Die Struktur des Rades ist deswegen nicht ausgeglichen. Das Rad bekommt oft einen Seitenschlag und muss nachzentriert werden. Im Dauerbetrieb entstehen durch die Wechselbelastungen der einzelnen Bauteile des Rades schwere Schäden wie z. B.: Jedes zweite Nippelloch in der Felge wird ausgerissen, die Speichen an der Zahnkranzseite des Rades brechen, die Flansche an der Zahnkranzseite der Nabe werden abgerissen usw.

Fig. 3 zeigt einen Teil eines exzentrisch gespeichten Fahrrad-Hinterrades 1' in der axialen Schnittansicht nach einer Ausführungsform der Erfindung. Die graphische Darstellung des Rades entspricht der Fig. 1 und darum wird aus Übersichtlichkeitsgründen auf Zahlen und Hinweisstriche zu mehreren Komponenten verzichtet und nur die Änderungen gegenüber der Fig. 1 betont.

Es ist ersichtlich, dass die Speichenspannungen T1' und T2' und zwangsläufig auch ihre horizontalen Kraftkomponenten P1' und P2' im Vergleich zur Fig. 1 grösser geworden sind. Bei dem Rad 1 in Fig. 1 mit dem Verhältnis der Masse c : d = 2 : 1 und dem Verhältnis der Speichenanzahl an den Radseiten von 1 : 1 ist die durchschnittliche Spannung aller Speichen im Rad ungenügend und beträgt erfahrungsgemäss höchstens 700 N. Das Rad ist darum aus vorher beschriebenen Gründen minderwertig. Bei dem Rad 1' kann man jedoch auch bei c : d = 2 : 1 und sogar bei gleicher Gesamtanzahl der Speichen wie im Rad 1 eine höhere durchschnittliche Spannung aller Speichen von etwa 1'000 N und mehr erzielen. Diese Spannung kann man jedoch nicht beliebig steigern wie später erklärt wird.

Das Vorgehen ist wie folgt: Man erhöht die Anzahl der Speichen an der Zahnkranzseite des Rades und gleichzeitig vermindert deren Anzahl an der Zahnkranzgegenseite, sodass das Verhältnis der Speichenanzahl an den Radseiten in diesem Beispiel jetzt 1:2 beträgt. So entsteht ein Speichenspannungsverhältnis an den Radseiten von 1:1 wie bei einem zentrisch gespeichten Vorderrad. Kurz gesagt: Zweimal grössere Spannung der Speichen an der Zahnkranzseite des Rades wird dort durch zweimal soviel Speichen ausgeglichen. Graphisch haben wir diesen Zustand in der Fig.3 so dargestellt, dass der Linienabschnitt T1' in zwei gleiche Abschnitte T1'/ 2 und T1'/ 2 zerfällt. Jeder von ihnen repräsentiert eine ganze Speiche und entspricht dem Linienabschnitt T2'. Die Verhältnisse in diesem Hinterrad sind aber nicht die gleichen wie in einem zentrisch gespeichten Vorderrad.

Die Belastungen des Materials auf Druck in den Verankerungsstellen der Speichen in der Felge und in der Nabe sind jetzt an beiden Radseiten gleich und auch die Setzerscheinungen bei den Speichenköpfen oder den Nippeln, welche sich in wenigen Zehnteln von Millimetern abspielen, sind dadurch gleich geworden. Die minimalen und maximalen Spannungen der einzelnen Speichen im ganzen Rad bewegen sich jetzt im zulässigen Bereich - auch bei einer Streuung von ± 200 bis 300 N. Die Köpfe der Speichennippel haben jetzt genügend Reibung auf ihrer Unterlage und die Nippel können sich selbsttätig nicht lockern. Die Speichen werden aber nicht übermässig gespannt, sodass die Zentrierung ohne Schwierigkeiten vor sich geht und sie brechen auch nach langer Belastung nicht. Die ganze Struktur des Rades ist somit ausgeglichen, das Rad wird dadurch sehr stabil und bekommt selten einen Seitenschlag. Die Schäden im Dauerbetrieb, wie sie beim konventionellen Rad in der Fig. 2 beschrieben wurden, können hier gar nicht vorkommen.

Die wichtige Seitensteifigkeit des Rades von der Seite des Zahnkranzes - oder von der Seite der Bremsscheibe - hat sich erhöht, weil die gesamte Speichenspannung im Rad erhöht wurde und somit auch die horizontalen Kraftkomponenten P1' und P2' der Speichenspannungen T1' und T2'. Die horizontalen Kräfte, die z.B. beim Fahren im Wiegetritt auf das Rad 1' gegen die Kraftkomponente P1' wirken, sind relativ zu P1' kleiner als die gleichen Kräfte relativ zu P1 in der Fig. 1. Nur der Winkel zwischen den Speichen 5' und der Felgenmittelebene M ist klein geblieben. Man kann jedoch diese Seitensteifigkeit nochmals erhöhen mit anderen Mitteln, wie später beschrieben wird.

Fig. 4 zeigt ein exzentrisch gespeichtes Fahrrad-Vorderrad oder Fahrrad-Hinterrad in der Seitenansicht nach einer Ausführungsform der Erfindung. Ein Hinterrad 1' dieser Art wurde gezeigt in der axialen Schnittansicht in der Fig. 3. Die Darstellung entspricht im wesentlichen der Fig. 2, wobei das Rad ebenfalls 24 Speichen hat und diese sind ebenfalls an beiden Radseiten gekreuzt.

Der wichtigste Unterschied zum konventionellen Rad in der Fig. 2 liegt darin, dass die Anzahl der Speichen an einer Radseite 16 beträgt, an der anderen Radseite jedoch 8 und somit ist das Anzahlverhältnis der Speichen 5' zu den Speichen 7' 2 : 1. Dies spricht gegen den bis heute immer eingehaltenen Grundsatz bei gespeichten Fahrrad-Rädern, nach welchem die Anzahl der Speichen an beiden Radseiten gleich ist.

Die Speichenspannungsverhältnisse T1 : T2 bei konventionell gespeichten Rädern mit einigen bekannten Naben, welche sich aus den Massen c und d auf den Naben ergeben, und welche für dieses Speichenanzahlverhältnis besonders geeignet sind, sind z.B. folgende:
Nabe Campagnolo Record, 1990, 8 - fach, Länge 130 mm: c : d = T1 : T2 = 2.13 : 1.
Nabe Shimano Ultegra, 2000, 9 - fach, Länge 130 mm: c : d = T1 : T2 = 1.84 : 1.

Wenn jetzt ein Rad mit einer ähnlichen Nabe und dem Verhältnis von c : d = 2 : 1 aber mit dem hier vorgeschlagenen Anzahlverhältnis der Speichen 5' zu den Speichen 7' von 2 : 1 gebaut wird, ergeben sich dann die Speichenspannungsverhältnisse an den Radseiten von 1 : 1, weil die Speichen an beiden Radseiten die gleiche Spannung haben werden. Vergleiche das Detail des Nabenflansches mit dem Detail in der Fig. 2. Somit ist das Ziel erreicht, das stabile Rad ist entstanden - und das mit fast keinem Aufwand!

In dieser Figur sind tabellarisch verschiedene brauchbare an beiden Radseiten gekreuzte und analog gestaltete Varianten der Speichenführung mit anderen Anzahlen der Speichen angegeben. Die Speichen der dem Betrachter zugewendeten Radseite, wo sich mehrere Speichen befinden, sind durch volle Striche dargestellt, die Speichen der anderen Radseite, wo sich weniger Speichen befinden, sind gestrichelt. Ähnliche Darstellungen findet man auch in den Fig. 5, 6, 7, 8 und 9.

Fig. 5 zeigt ein exzentrisch gespeichtes Fahrrad-Vorderrad oder Fahrrad-Hinterrad in der Seitenansicht nach einer anderen Ausführungsform der Erfindung. Das Rad hat insgesamt 27 Speichen und das Speichenanzahlverhältnis ist wieder 2 : 1 wie in der Fig.4. Es gibt 18 gekreuzte Speichen dargestellt in durchgezogenen Linien an der einen Radseite und 9 radial angeordnete gestrichelte Speichen an der Radgegenseite (Hybrid - Rad). Die tabellarisch angegebenen Gesamtzahlen der Speichen sind ungerade Zahlen und alle durch 3 dividierbar. So etwas gibt es bei konventionell gespeichten Rädern nicht, dort ist jede Gesamtzahl der Speichen immer nur durch 2 dividierbar.

Da an der Radseite mit weniger Speichen alle Speichen radial angeordnet sind, muss man die Berechnung des Verhältnisses der Speichenspannungen T1 : T2 = c : d, wie in der Fig. 1 angedeutet ist, korrigieren. Das Mass c ist die Distanz zwischen der Mittelebene der Verankerungsstellen der Speichen in der Felge und der Achse der Speiche (wo die Zugkraft wirksam ist) an der Stelle des Speichenloches in dem Flansch. Wenn alle Speichen an dieser Radseite von dem Raum zwischen den Flanschen in den zahnkranzgegenseitigen Flansch eingesteckt werden und dann entlang der äusseren Seite des Flansches zur Felge geführt werden - wie es meistens der Fall ist- , dann vergrössert sich das Mass c um etwa 3 Millimeter (der Punkt 8 wird um die Hälfte der Dicke des Flansches plus die Hälfte des Durchmessers der Speichen nach aussen (hier nach links) verschoben). Das Mass d bleibt dabei aber bestehen, weil sich an der anderen Radseite gekreuzte Speichen befinden.

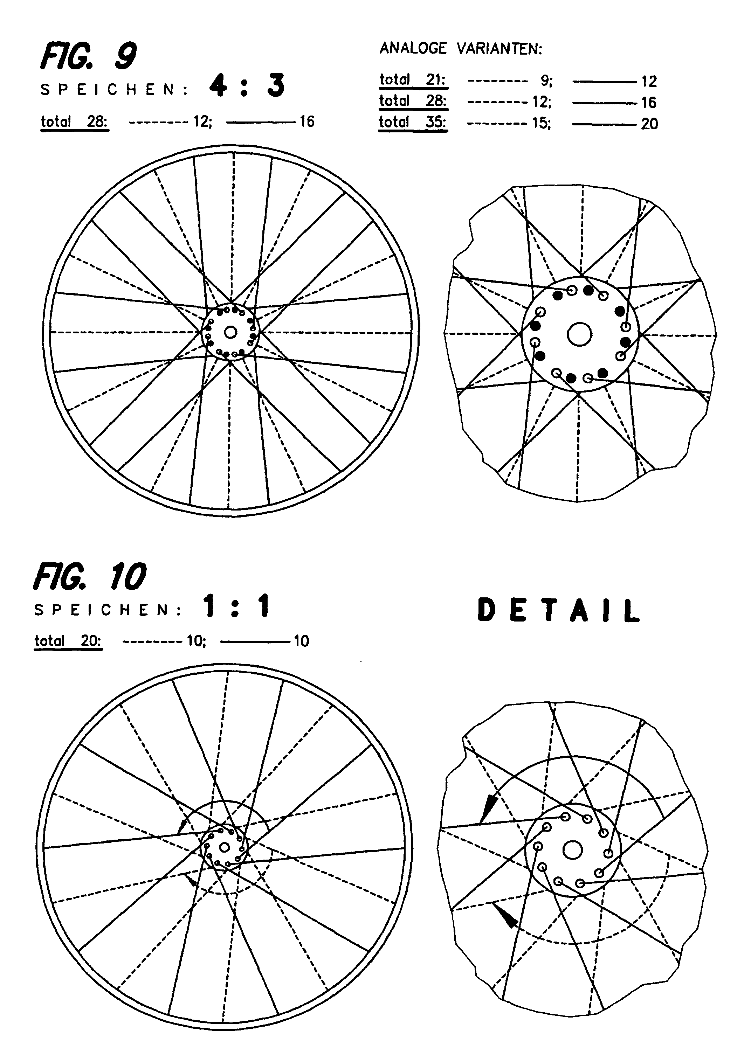

Umgekehrt, wenn alle Speichen von der Aussenseite des Rades in den zahnkranzgegenseitigen Flansch gesteckt werden - was nicht üblich ist - dann verkleinert sich das Mass c um diese 3 Millimeter. Das Mass d bleibt dabei wieder bestehen. Man kann sich diese Veränderungen mit Hilfe der schematischen Zeichnung der Fig.3 vorstellen. Auch bei den Fig. 4 und 6, 7, 8 könnte man an den Radseiten mit weniger Speichen die gestrichelten Speichen statt gekreuzt radial einspeichen und dann müsste man auch dort diese Korrektur der Berechnung durchführen. Gekreuzte Speichen an beiden Radseiten sind jedoch bis auf Ausnahmen immer vorteilhafter wie schon erwähnt wurde bei der Fig. 2. Ausserdem müssen die Nabenflansche für die radiale Bespeichung zugelassen sein (Siehe die Erklärung zu Fig. 10).

Bei Hybrid - Laufrädern ist eine beinahe gleiche Spannung der Speichen an beiden Radseiten nicht erwünscht. Sie ist erwünscht bei Laufrädern, die an beiden Seiten in der Seitenansicht des Rades gekreuzte Speichen haben, wie es auch bei heutigen konventionellen Laufrädern der Fall ist. Bei solchen Laufrädern im Betriebszustand wird das Drehmoment von beiden Flanschen auf die Felge übertragen (aber nur durch die Hälfte der sich kreuzenden Speichen - der sogenannten ziehenden Speichen).

Bei einem konventionellen Hybrid - Laufrad wird das Drehmoment durch die Hälfte der sich kreuzenden Speichen nur von einem Flansch auf die Felge übertragen und diese sind dadurch mehr belastet, weil die radialen Speichen an der anderen Radseite sich hier nicht beteiligen. Das ganze Drehmoment überträgt hier also nur ein Viertel aller Speichen im Rad (!). Um bei einem Hybrid - Laufrad gemäss der Erfindung ein gutes Kompromiss im Betrieb zu erzielen und die Spitzenwerte der Speichenspannungen zu beseitigen, sollen die radialen Speichen im Ruhezustand des Rades eine etwas grössere Spannung erhalten als die gekreuzten. Weniger z. B. bei Trekking - Fahrrädern, mehr z. B. bei Mountainbikes, je nach Grösse der erwarteten Drehmomente.

Fig. 6 zeigt ein exzentrisch gespeichtes Fahrrad-Vorderrad oder Fahrrad-Hinterrad in der Seitenansicht nach einer weiteren Ausführungsform, die aber nicht zur Erfindung gehört. Das Rad hat insgesamt 24 Speichen wieder mit dem Speichenanzahlverhältnis 2 : 1 wie in den Fig. 4 und 5. Es gibt also 16 und 8 an beiden Radseiten gekreuzte Speichen. Die Speichen sind in Dreiergruppen angeordnet. Heutzutage sind sehr modern teuere Laufräder, wo die Speichen ähnlich wie hier angeordnet sind, aber in Paaren. Auf einem solchen Hinterrad z.B. sieht man ein Paar der Speichen, die nahe aneinander in der Felge verankert sind, aber man kann nicht sehen, dass immer eine der Speichen im Paar eine nahezu zweifache Spannung als die andere hat und dementsprechend das Rad nicht stabil genug sein kann. Die gestrichelten Speichen könnte man auch radial einspeichen, aber mit entsprechender Änderung der Berechnung von c : d, wie in der Fig. 5 beschrieben wurde und mit der schlechteren Übertragung des Drehmomentes mit weniger Speichen.

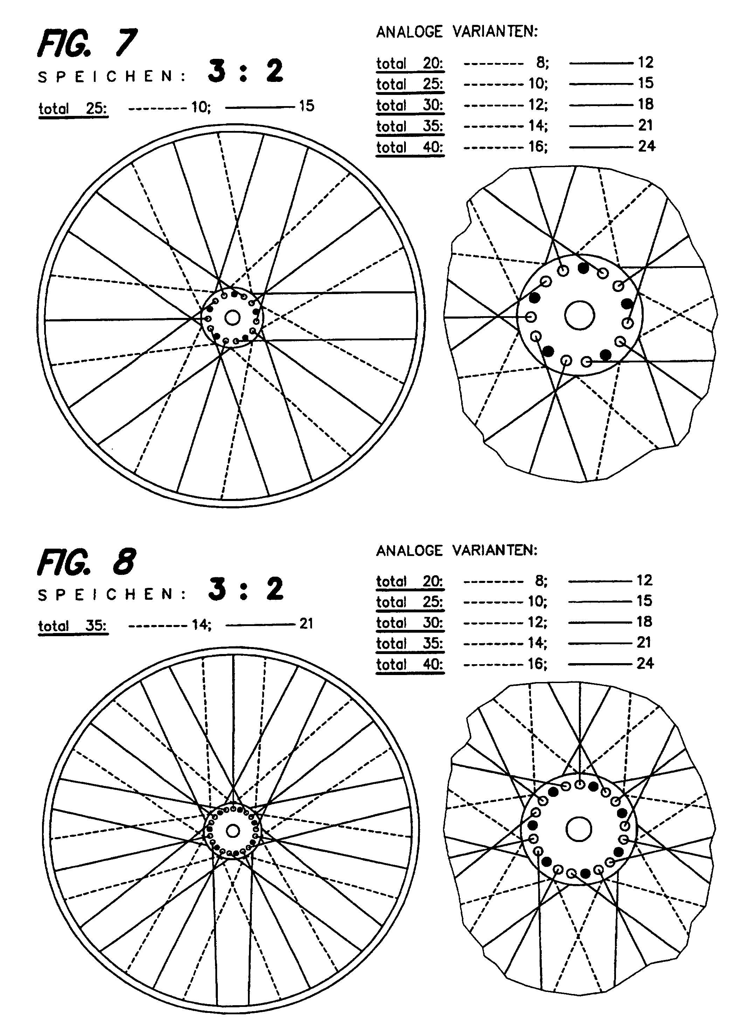

Fig. 7 zeigt ein exzentrisch gespeichtes Fahrrad-Vorderrad oder Fahrrad-Hinterrad in der Seitenansicht nach einer weiteren Ausführungsform der Erfindung. Dieses Rad hat insgesamt 25 Speichen und das Speichenanzahlverhältnis ist hier 3 : 2 (= 1.5 : 1).

Die Speichenspannungsverhältnisse T1 : T2 bei konventionell gespeichten Rädern mit einigen bekannten Naben, welche sich aus den Massen c und d auf den Naben ergeben, und welche für dieses Speichenanzahlverhältnis besonders geeignet sind, sind z.B. folgende:

Nabe Shimano Deore XT, 1996, 7 - fach, Länge 130 mm: c : d = T1 : T2 = 1.58 : 1.
Nabe Shimano Deore LX, 1996, 7 - fach, Länge 135 mm: c : d = T1 : T2 = 1.39 : 1.

Es gibt 15 und 10 Speichen an den Radseiten. Die Distanzen zwischen den Verankerungspunkten der Speichen in der Felge sind hier wie bei allen Figuren mit Ausnahme von der Fig.6 gleich gross. Solche Systeme sind für ein dauerhaftes Rad besser geeignet als das System nach der Fig.6, da man solche Räder nach einem Seitenschlag besser zentrieren kann. Alle tabellarisch angegebenen Speichengesamtzahlen sind durch 5 dividierbar. Auch hier muss ähnlich wie in der Fig.5 die Berechnung des Verhältnisses der Speichenspannungen T1 : T2 mit Hilfe von c : d korrigiert werden. An beiden Radseiten sind die Speichen zwar gekreuzt, aber an der Seite mit mehr Speichen gibt es immer neben den zwei gekreuzten Speichen auch noch eine radiale Speiche, die entlang der äusseren Seite des Flansches geführt wird. In diesem Fall muss man das Mass d etwa um 1.5 Millimeter vergrössern. Wenn man die radialen Speichen umgekehrt in den Flansch einsteckt - was wir nicht bevorzugen - muss man das Mass d um diese 1.5 Millimeter verkleinern. In beiden Fällen bleibt das Mass c bestehen, weil sich an dieser Radseite nur gekreuzte Speichen befinden.

Fig. 8 zeigt ein Rad analog zur Fig. 7. Es hat gesamt 35 Speichen mit einem Speichenanzahlverhältnis 3 : 2 (= 1.5 : 1). Es gibt 21 und 14 Speichen an den Radseiten. Wegen grosser Anzahl der Speichen ist das Rad vorteilhaft dort, wo höhere Belastungen vorkommen und/oder wo eine überdurchschnittliche Dauerhaftigkeit bei vielen gefahrenen Kilometern erwartet wird (ideal für Trainingsräder). Es wird eine sehr stabile Felge empfohlen. Auch hier muss man wie in der Fig. 7 das Mass d vergrössern oder verkleinern je nach Art der Speichenführung.

Fig. 9 zeigt ein exzentrisch gespeichtes Fahrrad - Vorderrad oder Fahrrad - Hinterrad in der Seitenansicht nach einer weiteren Ausführungsform der Erfindung. Das Rad hat insgesamt 28 Speichen und das Speichenanzahlverhältnis ist hier 4 : 3 (= 1.33 : 1). Es gibt 16 radiale und 12 gekreuzte Speichen an den Radseiten (Hybrid - Rad). Die tabellarisch angegebenen Speichengesamtzahlen sind durch 7 dividierbar. Die erzielte Veränderung des Speichenspannungsverhältnisses an den Radseiten ist relativ klein und könnte allein auch mit einer asymmetrischen Felge erzielt werden. Korrekturen von T1 : T2 mit Hilfe von c : d sind hier wie in der Fig. 5 möglich. Auch hier sind die vorteilhaften gleichen Distanzen zwischen den Verankerungsstellen der Speichen in der Felge angewendet. Die Lage der Speichenlöcher in den Flanschen ist so gewählt, dass die Länge aller Speichen an jeder Radseite gleich ist. Die Nabenflansche müssen für die radiale Bespeichung zugelassen sein, ähnlich wie in der Fig. 5.

Es gibt noch andere Speichenanzahlverhältnisse der Speichen an den Radseiten als die bisher beschriebenen und mit Figuren dokumentierten. Wir haben Räder mit den Verhältnissen 3 : 1, 5 : 2, 7 : 4 und 5 : 3 konstruiert. Die Resultate sind brauchbar. Da solche Räder aber in der heutigen Zeit wenig Interesse bei der Industrie finden würden, weil die Naben mit den geeigneten Massen c und d sehr sporadisch zu finden sind, haben wir auf die Figuren zu diesen Verhältnissen verzichtet. Auf Anfrage können wir aber einen Interessenten mit solchen Skizzen beliefern.

Zu den Speichensystemen soll ergänzend gesagt werden, dass man beliebige Anzahlen der Speichen links und rechts in einem Rad nicht verwenden kann. Man muss jede Einspeichungsart konstruieren so wie wir es in unseren Figuren gemacht haben. Wenn man ein beliebiges Speichenverhältnis rechts und links verwenden würde, so könnte man so ein Rad nicht richtig höhen - und seitenmässig zentrieren, da die Abstände der Speichenverankerungen in der Felge sehr unterschiedlich wären und dazu hätte das Rad eine Unwucht. Diese würde bei schnellen Abfahrten zu gefährlichen Vibrationen des Laufrades und des ganzen Fahrrades führen. Die zusammengehörigen Speichengruppen (mit 3, 5, 7 oder mehr Speichen) müssen auf dem Umfang der Felge regelmässig verteilt werden und sich mehrmals wiederholen. Kurz gesagt, das Laufrad mit seiner Bespeichung muss drehsymmetrisch sein.

Fig. 10 zeigt ein zentrisch gespeichtes Fahrrad - Vorderrad in der Seitenansicht, welches nicht erfindungsgemäss eingespeicht ist. Auch dieses System erhöht die Dauerhaftigkeit eines Rades wie die vorher beschriebenen exzentrisch gespeichten Systeme. Das Rad hat gesamt 20 Speichen, 10 an jeder Seite, sodass das Speichenanzahl- und das Speichenspannungsverhältnis 1 : 1 ist. Eine gerade Anzahl der Speichen kann man frei wählen und sie können in jede konventionelle Felge eingespeicht werden.

Dieses Rad kann man vergleichen mit einem konventionellen an beiden Radseiten radial gespeichten Rad, wo die Speichen senkrecht zum Speichenlochkreis aus dem Flansch austreten und auf dem kürzesten Weg zur Felge gelangen. (Radiale Speichen sind z. B. die gestrichelten Speichen in der Fig. 5 und 9.) Beidseitig radial gespeichte Räder sollen kleine aerodynamische Vorteile bringen (keine Luftverwirbelungen an den Kreuzungen der Speichen) und die Speichenspannungen sind hier bekanntlich regelmässiger als bei gekreuzten Speichensystemen. Diese Räder werden noch heute oft verlangt, weil sie optisch interessant sind.

Nachteile: Die Räder sind bekanntlich und systembedingt hart beim Fahren und bei längerer Benützung besteht durch Wechselbelastungen der Flansche eine Gefahr, dass ein Flansch im Bereich der Speichenlöcher abgerissen wird. Dies vor allem bei grösserer Anzahl der Speichen. Darum gibt der zurzeit weltgrösste Hersteller der Naben bei jeder verkauften Nabe folgende schriftliche Erklärung ab, Zitat: "Naben von Shimano eignen sich nicht für eine radiale Speichenmontage. Shimano ist deshalb nicht verpflichtet Reparaturen auszuführen oder Naben zu ersetzen, deren Speichenlöcher durch eine radiale Montage deformiert wurden."

Gemäss Fig. 10 verlassen alle durchgezogenen Speichen an einer Radseite nahezu tangential den Lochkreis des Flansches und alle gestrichelten Speichen an der anderen Radseite auch - jedoch in der entgegengesetzten Richtung. Der durchgezogene und der gestrichelte Pfeil zeigen die Richtungen, in welchen die Speichen beim Zentrieren des Rades die Flansche geringfügig verdrehen. So entsteht eine Verdrehung des zylindrischen Nabenkörpers, der die Flansche verbindet, im elastischen Bereich der Materialverformung und der Nabenkörper verhält sich jetzt ähnlich wie ein Torsionsstab. Wenn sich beim Fahren durch Betriebsbelastungen die durchschnittliche Spannung aller Speichen im Rad augenblicklich verändert, verändert sich augenblicklich auch die Verdrehung des Nabenkörpers und diese Veränderung unterstützt das Verhalten der Speichen. Um diese federnde Funktion zu erfüllen muss der Nabenkörper richtige Dimensionen haben. Er darf nicht zu schwach sein (Durchmesser nicht unter etwa 20 Millimeter) aber auch nicht zu starr. Eine überschlägige Berechnung der Dimensionen soll durchgeführt werden.

Dieses Speichensystem hat die Vorteile des radialen Systems (Aerodynamik, regelmässige Speichenspannungen, interessante Optik) aber nicht dessen Nachteile. Das Rad ist noch elastischer als jedes vergleichbare konventionell gespeichte Rad und darum auch dauerhaft und angenehm zum Fahren, da der Fahrer nicht so schnell ermüdet. Die Gründe dafür sind längere Speichen und die zusätzliche federnde Wirkung des Nabenkörpers. Das Wichtigste aber ist, dass die Gefahr der ausgerissenen Speichenlöcher hier gar nicht existiert, da jede Speiche den Flansch tangential verlässt und deswegen müsste sie bei Überlastung viel mehr Flanschmaterial ausreissen als eine Speiche bei radialer Bespeichung. Dabei spielt es keine Rolle, ob die Speichen in die Flansche von dem Raum zwischen den Flanschen eingesteckt werden wie es in der Fig. 10 dargestellt ist (das bringt mehr Seitensteifigkeit) oder von der äusseren Seite der Flansche (das ist besser aerodynamisch).

Dieses System kann nicht verwendet werden bei Rädern, deren Speichen ein Drehmoment übertragen müssen. Wäre ein Drehmoment, das von der Nabe durch die Speichen auf die Felge zu übertragen ist vorhanden, dann steigt die Spannung der Speichen an einer Radseite während sie sich an der anderen Seite vermindert. Dies verursacht eine momentane seitliche Bewegung der Felge, die nach der Grösse des Drehmomentes mehrere Millimeter ausmachen kann. Das System ist also überhaupt nicht geeignet für alle Hinterräder (Antriebs- und/oder Bremsdrehmomente) und auch nicht für Vorderräder mit einer Bremse auf oder in der Nabe. Es ist aber sehr geeignet für Vorderräder, die an den Felgenflanken gebremst werden, und das sind heute die meisten. Eigentlich kann man konventionelle beidseitig radial gespeichte Räder auch nur bei solchen Vorderrädern verwenden, da sie auch kein Drehmoment übertragen können - wenn auch aus anderen Gründen (kein Hebelarm zwischen Speiche und Radachse).

### ZUSÄTZLICHE MASSNAHMEN

Wie schon gesagt wurde, ist es Aufgabe der Erfindung, die Schaffung eines exzentrisch gespeichten Rades von bisher unerreichbarer Dauerhaftigkeit. Das wird erreicht durch die ungleiche Anzahl der Speichen an den Radseiten gemäss Erfindung. Es gibt aber noch andere Massnahmen, die diesem Ziel dienen.

Eine davon ist die Verwendung einer asymmetrischen Felge mit seitlich versetzten Verankerungsstellen der Speichen in Richtung zur Zahnkranzgegenseite des Rades. Das Verhältnis der Masse c : d auf der Nabe und somit auch das wichtige Speichenspannungsverhältnis von T1 : T2 verkleinern sich rechnerisch dadurch erheblich, da das Mass c verkleinert wird und gleichzeitig das Mass d vergrössert wird. Somit vergrössert sich die Seitensteifigkeit des Rades in Richtung vom Zahnkranz oder von der Bremsscheibe zur anderen Radseite und auch die Dauerhaftigkeit des Rades wird besser.

Eine andere Massnahme ist das Einstecken der konventionellen am Ende gebogenen Speichen in die konventionellen Flansche nur von deren einen Seite (s. Anspruch 12). Dies kommt in Frage besonders bei radialer Bespeichung (Fig. 5, 9) aber auch bei der in der Seitenansicht des Rades gekreuzter Bespeichung, wo sich die Speichen genügend weit weg von dem Flansch kreuzen (z. B. wie die gestrichelten Speichen in der Fig. 4 oder 6). Man kann die Speichen z. B. in beide Flansche von aussen oder von innen einstecken oder in den einen Flansch von aussen und in den anderen von innen. Oder man steckt in einen Flansch gekreuzte Speichen wechselweise von beiden Seiten ein und nur der andere Flansch ist einseitig bespeicht. Solche Massnahmen beeinflussen die Grösse der Masse c und d, welche auf der Nabe gemessen wurden, und das wichtige Verhältnis von c : d verändert sich dann, wie es im Falle des Masses c in der Fig. 5 beschrieben wurde. So kann man das Speichenspannungsverhältnis T1 : T2, das sich aus den Massen c und d auf der Nabe ergibt, in eine erwünschte Richtung korrigieren.

Eine andere Massnahme ist ein genügend grosser Abstand der Flansche auf der Nabe voneinander (2b = c + d). Dabei müssen die Längen 2a und d bestehen bleiben und nur das Mass c wird vergrössert. Es steht ausser Zweifel, dass die Seitensteifigkeit eines Rades mit dem wachsenden Abstand der Flansche zunimmt und zwar in Richtung von beiden Radseiten her. Es ist verwunderlich, dass diese Erkenntnis noch heute auch bei namhaften Herstellern ignoriert wird oder unbekannt ist. Heutzutage wird bei konventionellen Hinterrädern dieser Abstand nach einer bekannten Regel etwa 54 (± 1 Millimeter) gross gehalten. Bei einem zu kleinen Abstand z.B. unter 50 Millimeter sinkt die Seitensteifigkeit und die Dauerhaftigkeit des Rades sehr stark. Umgekehrt, bei einem zu grossen Abstand z.B. über 60 Millimeter steigt das Speichenspannungsverhältnis auf Werte über 2 : 1 und es kommt im Betrieb bald zur Lockerung der Nippel bei Speichen mit zu kleiner Spannung und folglich zu einem Seitenschlag. Bei Spezialrädern beseitigt man dies durch Verwendung von speziellen Nippeln mit einer Einlage aus Kunststoff. Der sehr grossen Spannung der Speichen an der Zahnkranzseite des Rades begegnet man mit Verwendung von speziellen dickeren Speichen an dieser Seite. Diese Spezialteile sind im Falle einer Reparatur selten zu erhalten. Der grosse Unterschied in der Spannung der Speichen an beiden Radseiten bleibt aber bestehen und die ganze Lösung des Problems ist aus diesen Gründen unbefriedigend.

### PRAKTISCHE RATSCHLÄGE

### Siehe Fig. 1.

Bei einer Hinterradnabe für ein Rennfahrrad mit folgenden Massen in Millimetern: 2a = 130; c = 35; d = 19; Abstand der Nabenflansche c + d = 54, ist das Speichenspannungsverhältnis T1 : T2 = c : d = 35 : 19 = 1.84 : 1. Bei einer konventionellen Bespeichung eines Rades mit dieser Nabe (Speichen links und rechts sind gekreuzt, Verankerung der Speichen in der Felge liegt in ihrer Mitte und die Anzahl der Speichen an beiden Radseiten ist gleich) ist also die durchschnittliche Spannung der Speichen 5 rechts (an der mehr belasteten Naben-Zahnkranzseite) 1.84 - mal grösser als die Spannung der Speichen 7 links (an der weniger belasteten Nabengegenseite).

Beispiele der Speichenspannungen in Rädern mit der beschriebenen Nabe unter Ausnützung verschiedener Patentansprüche:
1) Verwendung der Speichenanzahl der Speichen 5' zu den Speichen 7' im Verhältnis 3:2 (= 1.5 : 1) - siehe Fig. 7 und 8.
   Das ursprüngliche Speichenspannungsverhältnis 1.84 : 1 reduziert sich dadurch 1.5-mal, so dass T1' : T2' = 1.84 : 1.5 = 1.23 : 1.
   Das Rad kann man gut gebrauchen, das neue Speichenspannungsverhältnis 1.23 : 1 ist viel günstiger als das ursprüngliche 1.84 : 1 und liegt tief im annehmbaren Bereich (bis etwa 1.4 : 1). Man braucht eine konventionelle Nabe und konventionelle Felge, nur die Anzahl der Speichen an der linken und der rechten Radseite ist jetzt verschieden. Es ist aus früher beschriebenen Gründen vorteilhaft, dass an beiden Radseiten sich gekreuzte Speichen befinden.
2) Verwendung des Speichenanzahlverhältnisses 3 : 2 (wie im Falle 1) und zweitens, Verwendung einer asymmetrischen Felge mit um 3 Millimeter in Richtung zur Zahnkranzgegenseite des Rades versetzten Speichenverankerungsstellen.
   Erstens, wie im Falle 1): Das ursprüngliche Speichenspannungsverhältnis 1.84 : 1 reduziert sich 1.5 - mal.
   Zweitens, das ursprüngliche Verhältnis c : d = 35 : 19 = 1.84 : 1 verändert sich durch Versetzung der Speichenverankerung in der Felge um 3 mm auf (c - 3) : (d + 3) = 32 : 22 = 1.45 : 1. Das ursprüngliche Verhältnis 1.84 : 1 reduziert sich dadurch zum zweiten Mal, diesmal (1.84 : 1.45 =) 1.27 -mal.
   Das endgültige Speichenspannungsverhältnis T1' : T2' = (1.84 : 1.5) : 1.27 = 0.97 : 1.
   Damit ist das ideale Speichenspannungsverhältnis von 1 : 1 praktisch erreicht. Zu dieser ausgezeichneten Lösung braucht man ein Speichenanzahlverhältnis von 3 : 2 und eine asymmetrische Felge. Solche Felgen sind seit Jahren auf dem Markt. Sie verbessern nicht nur das Speichenspannungsverhältnis der beiden Radseiten, sondern machen auch das Rad in Richtung von dem Zahnkranz zu der Zahnkranzgegenseite merklich steifer. Gekreuzte Speichen an beiden Radseiten sind vorteilhaft.
3) Verwendung der Speichenanzahl der Speichen 5' zu den Speichen 7' im Verhältnis 2 : 1 (s. Fig. 4, 5, 6).
   Das ursprüngliche Speichenspannungsverhältnis 1.84 : 1 reduziert sich dadurch 2 - mal, sodass T1' : T2' = 1.84 : 2 = 0.92 : 1.
   Das Rad kann man gut gebrauchen, das neue Speichenspannungsverhältnis 0.92 : 1 ist viel günstiger als das ursprüngliche 1.84 : 1. Man braucht eine konventionelle Nabe und konventionelle Felge, nur die Anzahl der Speichen an der linken und der rechten Radseite ist jetzt verschieden. Da die Spannung T1' rechts jetzt kleiner ist als die Spannung T2' links, ist diese Lösung vorteilhaft bei den Speichensystemen, wo alle Speichen links radial eingespeicht sind (Fig. 5), sodass das Drehmoment ausschliesslich durch die rechten gekreuzten Speichen übertragen wird. Bei diesen Hybrid - Rädern kann man noch weitere Korrekturen der Speichenspannungen erzielen durch einstecken der radialen Speichen in den Flansch nur von dessen einen Seite.
4) Verwendung des Speichenanzahlverhältnisses 2 : 1 (wie im Falle 3), zweitens, Verwendung einer asymmetrischen Felge mit um 3 Millimeter in Richtung Zahnkranzgegenseite des Rades versetzten Speichenverankerungsstellen (wie im Falle 2) und drittens, Verwendung eines in Richtung zur Zahnkranzgegenseite der Nabe verlängerten Nabenkörpers.
   Erstens, wie im Falle 3): Das ursprüngliche Speichenspannungsverhältnis 1.84 : 1 reduziert sich 2 - mal.
   Zweitens, wie im Falle 2): Das ursprüngliche Verhältnis c : d = 35 : 19 = 1.84 : 1 verändert sich durch Versetzung der Speichenverankerung in der Felge auf 1.45 : 1. Das ursprüngliche Verhältnis 1.84 : 1 reduziert sich dadurch zum zweiten Mal, diesmal (1.84 : 1.45 =) 1.27 - mal. Das Speichenspannungsverhältnis T1' : T2' wäre bis jetzt (1.84 : 2) : 1.27 = 0.724 : 1.

Jetzt wäre die Spannung T1' zu klein, T2' zu gross. Darum verwendet man nun, zusätzlich, eine neue Nabe, die speziell hergestellt werden muss. Das ursprüngliche Mass d = 19 bleibt bestehen, aber das Mass c = 35 auf dem Nabenkörper wird vergrössert (1 : 0.724) - mal, sodass c (neu) = 35 x (1 : 0.724) = 48.34. Die neue Nabe hat folgende Masse: 2a = 130; c = 48.34 (neu); d = 19; Abstand der Flansche = c + d = 67.34 (neu); c : d = 2.54 : 1 (neu).

Das endgültige Speichenspannungsverhältnis T1' : T2' = (0.724 : 1) x (1 : 0.724) = 1:1.

Es sind nun rechnerisch die idealen Masse der Nabe und dadurch das ideale Speichenspannungsverhältnis von T1' : T2' = 1 : 1 erreicht. Zu dieser Lösung braucht man ein Speichenanzahlverhältnis von 2 : 1 (wie im Fall 3), eine asymmetrische Felge (wie im Fall 2) und neu, eine neue Gestaltung der Nabe an ihrer linken Seite. Dafür bekommt man ein Hinterrad, mit welchem sich alle bisher bekannten und viel teureren Hinterräder nicht vergleichen können. Die asymmetrische Felge verbessert die Steifigkeit des Rades von rechts. Die Nabe mit grosser Distanz der Flansche gibt dem Rad zusätzlich grössere Steifigkeit von rechts und links. Das Speichenspannungsverhältnis von 1 : 1 verhindert Speichenbrüche und Seitenschläge, die durch unregelmässige Setzerscheinungen in den Verankerungsstellen der Speichen entstehen. Sehr wichtig ist, dass man das Rad sehr einfach reparieren kann, da es konventionelle Speichen und Nippel besitzt, die billig und überall käuflich sind. Auch bei diesem Rad sind gekreuzte Speichen an beiden Radseiten empfehlenswert (Fig. 4, 6).

Die 4 beschriebenen Beispiele zeigen (alle bei Verwendung einer Nabe mit den Massen c : d = 35 : 19 = 1.84 : 1), dass man das angestrebte Speichenspannungsverhältnis an den Radseiten von 1 : 1 nur im Beispiel 4) genau erreicht hat. Dort muss man aber zwei zusätzliche Massnahmen anwenden: Die asymmetrische Felge und eine vollkommen neue genau konstruierte Nabe. Dazu wird sich ein Radhersteller aber aus Kostengründen nur selten entscheiden. Im Beispiel 2) erreicht man ein Verhältnis von 0.97 : 1 mit Hilfe der asymmetrischen Felge. Auch diese ist derzeit noch nicht immer zu bekommen oder aus verschiedenen Gründen nicht erwünscht. Ohne jegliche zusätzliche Massnahmen erreicht man mit der erwähnten Nabe im Beispiel 3) ein Verhältnis von 0.92 : 1 und im Beispiel 1) 1 : 1.23. Das Verhältnis von 1 : 1.23 bedeutet aber schon 23 % Abweichung von dem angestrebten Speichenspannungsverhältnis von 1 : 1. Wenn man ohne zusätzliche Massnahmen auskommen will, was meistens der Fall sein wird, dann kann diese Abweichung auch 45 % und mehr erreichen. Auf dem Markt befinden sich sogar Naben mit den Massen c und d in einem Verhältnis von etwa 2.5 : 1 (!).

Dass man das Speichenspannungsverhältnis von 1 : 1 meistens nur mit gewissen Abweichungen erreichen kann ist dadurch verursacht, dass es unzählige Verhältnisse der Masse c und d auf den käuflichen Naben gibt, welche das Speichenspannungsverhältnis an den Seiten eines konventionellen Rades bestimmen, aber nur wenige Speichenanzahlverhältnisse existieren, welche gegen die ungünstigen konventionellen Spannungsverhältnisse wirken und welche technisch machbar und praktisch verwendbar sind (siehe die Erklärung zu Fig. 9). Man kann nur selten ein Verhältnis der Speichenanzahl an den Radseiten verwenden, welches am nächsten dem Verhältnis c : d auf der Nabe entspricht. Darum muss man aus verschiedenen Gründen auf weiter entfernte Verhältnisse der Speichenanzahl ausweichen. Bei einigen von uns vorgeschlagenen Verhältnissen sind die möglichen Gesamtzahlen der Speichen im Rad nicht ausreichend und darum sind diese Verhältnisse nicht immer anwendbar. Das Definieren der Lage der Speichenlöcher in der Felge und in der Nabe ist kompliziert. Die Distanzen der Verankerungspunkte der Speichen in der Felge sind unterschiedlich, darum ist die Optik des Rades nicht befriedigend. Es gibt mehrere unterschiedliche Längen der Speichen im Rand, das Einspeichen des Rades ist dadurch erschwert, usw.

Abweichungen von Null bis plus/minus 50% von dem angestrebten Verhältnis der Speichenspannungen von 1 : 1 (in der Praxis werden diese Abweichungen durchschnittlich weniger als etwa 20% ausmachen) bedeuten aber einen grossen Fortschritt gegenüber dem Stand der Technik. Solche Räder sind nach verschiedenen Testen mit Abstand dauerhafter als die konventionellen Räder. Die Abweichungen der Verhältnisse der Speichenspannungen an den Radseiten von dem Verhältnis von 1 : 1 betragen bei heutigen konventionellen Rädern nämlich etwa 50%, 100% (siehe Angaben zu den Naben in Erklärungen zu Fig. 7 und 4) oder sogar 150 % (!), je nach den verwendeten existierenden Naben.

### EMPFEHLUNGEN, BISHERIGE ERFAHRUNGEN

Das Einspeichen der neuen Räder ist so einfach wie bei den konventionellen Rädern. Das Zentrieren von Hand geht sogar besser, da man die Nippel an beiden Radseiten ohne grossen Widerstand drehen kann. Für das Zentrieren mit einem Automaten müsste man die Maschine umprogrammieren. Wichtig ist die grössere durchschnittliche Speichenspannung (von etwa 1'000 N und mehr), die mit einem geeichten Speichen-Spannungsmessgerät wenigstens in gewissen Zeitabständen gemessen werden soll, und das mehrfache Recken und Strecken des Rades bei seinem Zentrieren. Ein gutes Laufrad muss eine gute, nicht zu leichte Felge besitzen, z.B. bei einem Rennfahrrad eine tropfenförmige Felge, etwa 19 mm breit und 20 mm hoch und nicht unter ca. 430 g schwer (asymmetrische Felgen mit seitlich versetzten Speichen und symmetrische Felgen mit diesen Werten sind auf dem Markt), konventionelle Qualitätsspeichen und gute konventionelle gefräste Messingnippel. Sehr empfehlenswert sind weiter regelmässige Abstände der Verankerungsstellen der Speichen in der Felge, Speichen beidseitig gekreuzt und insgesamt nicht viel weniger als 24 Stücke. Gute Arbeit beim Einspeichen und Zentrieren setzt sich durch.

Zur Vereinfachung der Bespeichung eines Rades und aus Kostengründen empfehlen wir folgendes: Die Bohrungen für die Speichennippel in der Felge (in deren Mitte oder seitlich versetzt) sollen so einfach als möglich ausgeführt werden. Alle Löcher sollen in einer Linie liegen (keine Zickzacklinien) und in radialer Richtung (senkrecht zur Radachse) gebohrt werden. Richtungsorientierungen der Bohrungen nach vorne, nach hinten, nach links oder nach rechts sind teuer, unnötig, und bei der Bespeichung verwirrend. Genügender Durchmesser der Bohrungen muss gewährleistet werden, damit sich die Nippel im Loch nach Bedarf selbst neigen können. Der Bohrungsdurchmesser ist der Durchmesser des zylindrischen Teiles des verwendeten Nippels mit einer Zugabe von etwa 0.4 bis 0.5 Millimetern je nach Dicke des gebohrten Materials und nicht etwa nur 0.2 Millimetern, wie es bei den richtungsorientierten Bohrungen üblich ist.

Prototypen für Versuchszwecke sind einfach zu anfertigen, weil man konventionelle Naben, Speichen, Nippeln und Felgen verwenden kann. Nur die Anzahl und die Lage der Löcher für die Speichen in der Nabe und in der Felge sind jetzt anders. Man muss sich konventionelle Felgen und Naben ohne Löcher besorgen und die Löcher dann auf richtigen Stellen selber bohren. Dabei ist die Lage der Löcher in der Felge (bis auf Fig. 6) einfach zu bestimmen (regelmässige Abstände voneinander auf dem Umfang der Felge bei bekannter Anzahl der Löcher) und die Bohrungen sollen gemäss der vorherigen Anleitung ausgeführt werden. Die genaue Lage der Löcher und die Zusammenhänge dieser Lagen in den beiden Nabenflanschen zueinander muss man selber bestimmen, was für einen erfahrenen Techniker kein Problem sein sollte. Hier können auch die Details in den Figuren helfen.

Für eine durchschnittliche Speichenspannung gibt es keinen optimalen Wert für alle Räder. Die angestrebte grösstmögliche Spannung, bei welcher die grösste Seitensteifigkeit des Rades erreicht wird, wird von der Felge und der Anzahl und Anordnung der Speichen bestimmt. Wenn man diese Spannung beim Zentrieren übersteigt, dann nimmt die Stabilität des Rades wieder schnell ab. Diese Gefahr besteht hauptsächlich bei schwachen Felgen und grosser Anzahl der Speichen (z. B. 30 und mehr). Jeder erfahrene Radbauer kennt die entsprechenden Methoden zur Ermittlung des optimalen Wertes. Hat sich einmal eine optimale Spannung ergeben, kann diese mit dem Messgerät gemessen und archiviert werden.

Erfahrungen mit den Rädern im Betrieb gibt es noch nicht viele. Ein paar Räder sind im Dauereinsatz und bis jetzt zeigen sie gar keine Ermüdungserscheinungen. Eines kann man aber schon jetzt voraussehen. Gemäss Dauertesten mit Rädern mit den asymmetrischen Felgen hat sich ihre Dauerhaftigkeit im Vergleich mit konventionellen Rädern wesentlich erhöht. Der Hauptgrund dafür war das verbesserte Speichenspannungsverhältnis um etwa 30%. Hier geht es aber um Verbesserungen dieses Verhältnisses bis zu 100% (!) und dadurch ist eine weitere Erhöhung der Dauerhaftigkeit zu erwarten. Vibrationen des Fahrrades bei schneller Fahrt - wie einige Theoretiker befürchten könnten - sind weitgehend unbekannt.

Mit dem bisherig Beschriebenen kann auch die Speichenspannung bei exzentrisch gespeichten Fahrrad-Rädern vereinheitlicht werden. Das erfindungsgemässe Verfahren ist Folgendes: Indem die Nabe an den einzelnen Seiten der Felgenmittelebene (M) mit einer entsprechend nicht gleichen Anzahl von verankerten Speichen versehen wird, kann die durchschnittliche Spannung der Speichen, soweit wie erwünscht, ausgeglichen werden. Wie bereits beschrieben, sind die gesamten Spannungen der Speichen, welche von der Nabe an der einen bzw. an der gegenüberliegenden Seite der Felgenmittelebene (M) in Richtung zur Felge führen, unterschiedlich gross. Durch die unterschiedliche Anzahl verankerter Speichen kann dies ausgeglichen werden.

### DIE ZUKUNFT

Die beschriebenen Möglichkeiten zur Ausnützung der hier diskutierten Lehre sind auf keinen Fall erschöpfend behandelt worden. Im Laufe der Zeit werden sicher bisher unbekannte Speichensysteme entstehen, welche die Dauerhaftigkeit der Räder erhöhen werden. Alle diesen neuen Varianten werden aber durch den Patentanspruch 1 abgedeckt, wobei die Anzahl der Speichen an den Seiten eines exzentrisch gespeichten Fahrrad-Rades verschieden ist.

Der Erfinder glaubt, dass diese Lehre die Bespeichung der Laufräder revolutionieren wird. Jeder namhafte Fahrrad - oder Laufradhersteller wird sich damit früher oder später auseinandersetzen müssen. Es gelingt selten, dass ein jahrzehntelang bekanntes und immer grösser werdendes Problem, um dessen Lösung sich die weltgrössten Firmen mit verschiedensten Mitteln und grösstem Aufwand bemühen, auf solche Art und Weise beseitigt wird. Die Speichensysteme mit den Speichenanzahlverhältnissen von 3 : 1, 5 : 2, 2 : 1, 7 : 4, 5 : 3, 3 : 2 und 4 : 3 unterstützt noch durch "ZUSÄTZLICHE MASSNAHMEN" erlauben es, die Speichenspannungen an beiden Radseiten bei Verwendung jeder beliebigen Nabe weitgehend zu optimieren und die ausgeglichene Struktur des Rades sorgt nachher für seine Dauerhaftigkeit. Unsere Lösung des Problems - der höchst unerwünschten ungleichen Speichenspannungen an den Seiten eines Fahrrad-Rades - ist sehr überraschend. Es ist aber mit Abstand die einfachste, die billigste und die vollkommenste Lösung.

## Patentansprüche

1. Gespeichtes Fahrradrad bestehend aus einer Nabe, die durch Speichen mit einer ringförmigen Felge unter Spannung verbunden ist,
mit einer ungleichen Anzahl Speichen an den beiden Radseiten,
bei welchem die Mittelebene der Verankerungsstellen der Speichen in der Felge von der Mittelebene der Nabenflansche oder von der Mittelebene der anders ausgebildeten Verankerungsstellen der Speichen an den Seiten der Nabe (F) seitlich versetzt ist,
**dadurch gekennzeichnet,**
. **dass** die Distanzen zwischen den Verankerungsstellen der Speichen in der Felge gleich gross sind,
. **dass** ein erstes Verhältnis einer ersten Anzahl der Speichen, welche von der Nabe an derjenigen Seite der Felgenmittelebene (M) in Richtung zur Felge führen, wo eine höhere Summe der Spannungen dieser Speichen vorhanden ist, zu einer zweiten Anzahl der Speichen, welche von der Nabe an der gegenüberliegenden Seite der Felgenmittelebene (M) in Richtung zur Felge führen, wo eine niedrigere Summe der Spannungen der Speichen vorhanden ist, 3 : 1 oder 5 : 2 oder 2 : 1 oder 7 : 4 oder 5 : 3 oder 3 : 2 oder 4 : 3 beträgt und
- einem zweiten Verhältnis der Masse c : d entspricht,
- und **dass** das erste Verhältnis und das zweite Verhältnis im wesentlichen einander gleich sind oder maximal 50 Prozent voneinander abweichen,
wobei:
c ist das Mass zwischen der radialen Mittelebene der Achsen der in der Nabe verankerten Speichen, welche von der Nabe an derjenigen Seite der Felgenmittelebene (M) in Richtung zur Felge führen, wo eine niedrigere gesamte Spannung dieser Speichen vorhanden ist, an den Stellen, wo die Speichen die Nabe verlassen und die Richtung zur Felge eben erreicht haben, und der radialen Mittelebene der Achsen aller in der Felge verankerten Speichen an den Stellen, wo die Speichen die Felge verlassen und die Richtung zur Nabe eben erreicht haben, und
d ist das analoge Mass zu c an der gegenüberliegenden Seite der Felgenmittelebene (M) wo eine grössere gesamte Spannung der in der Nabe verankerten Speichen vorhanden ist,
wodurch die durchschnittlichen Spannung der ersten Anzahl von Speichen, welche von der Nabe an der einen Seite der Felgenmittelebene (M) in Richtung zur Felge führen und die durchschnittlichen Spannung der zweiten Anzahl von Speichen, welche von der Nabe an der anderen Seite der Felgenmittelebene (M) in Richtung zur Felge führen, im wesentlichen gleich ist oder maximal 50 Prozent voneinander abweichen.

2. Gespeichtes Fahrradrad nach Anspruch 1**, dadurch gekennzeichnet,**
**dass** die Anzahl der Speichen, welche von der Nabe an der einen Seite der Felgenmittelebene (M) in Richtung zur Felge führen und die Anzahl der Speichen, welche von der Nabe an der anderen Seite der Felgenmittelebene (M) in Richtung zur Felge führen, in einem Verhältnis von c : d steht,
wodurch die durchschnittliche Spannung der Speichen, welche von der Nabe an der einen Seite der Felgenmittelebene (M) in Richtung zur Felge führen und die durchschnittliche Spannung der Speichen, welche von der Nabe an der anderen Seite der Felgenmittelebene (M) in Richtung zur Felge führen, in einem Verhältnis von 1 : 1 steht.

3. Gespeichtes Fahrradrad nach Anspruch 1, **dadurch gekennzeichnet, dass** die Anzahl der Speichen, welche von der Nabe an der einen Seite der Felgenmittelebene (M) in Richtung zur Felge führen und die Anzahl der Speichen, welche von der Nabe an der anderen Seite der Felgenmittelebene (M) zur Felge führen, im Verhältnis 3 : 1 steht.

4. Gespeichtes Fahrradrad nach Anspruch 1, **dadurch gekennzeichnet, dass** die Anzahl der Speichen, welche von der Nabe an der einen Seite der Felgenmittelebene (M) in Richtung zur Felge führen und die Anzahl der Speichen, welche von der Nabe an der anderen Seite der Felgenmittelebene (M) zur Felge führen, im Verhältnis 5 : 2 steht.

5. Gespeichtes Fahrradrad nach Anspruch 1, **dadurch gekennzeichnet, dass** die Anzahl der Speichen, welche von der Nabe an der einen Seite der Felgenmittelebene (M) in Richtung zur Felge führen und die Anzahl der Speichen, welche von der Nabe an der anderen Seite der Felgenmittelebene (M) zur Felge führen, im Verhältnis 2: 1 steht.

6. Gespeichtes Fahrradrad nach Anspruch 1, **dadurch gekennzeichnet, dass** die Anzahl der Speichen, welche von der Nabe an der einen Seite der Felgenmittelebene (M) in Richtung zur Felge führen und die Anzahl der Speichen, welche von der Nabe an der anderen Seite der Felgenmittelebene (M) zur Felge führen, im Verhältnis 7 : 4 steht.

7. Gespeichtes Fahrradrad nach Anspruch 1, **dadurch gekennzeichnet, dass** die Anzahl der Speichen, welche von der Nabe an der einen Seite der Felgenmittelebene (M) in Richtung zur Felge führen und die Anzahl der Speichen, welche von der Nabe an der anderen Seite der Felgenmittelebene (M) zur Felge führen, im Verhältnis 5 : 3 steht.

8. Gespeichtes Fahrradrad nach Anspruch 1, **dadurch gekennzeichnet, dass** die Anzahl der Speichen, welche von der Nabe an der einen Seite der Felgenmittelebene (M) in Richtung zur Felge führen und die Anzahl der Speichen, welche von der Nabe an der anderen Seite der Felgenmittelebene (M) zur Felge führen, im Verhältnis 3 : 2 steht.

9. Gespeichtes Fahrradrad nach Anspruch 1, **dadurch gekennzeichnet, dass** die Anzahl der Speichen, welche von der Nabe an der einen Seite der Felgenmittelebene (M) in Richtung zur Felge führen und die Anzahl der Speichen, welche von der Nabe an der anderen Seite der Felgenmittelebene (M) zur Felge führen, im Verhältnis 4 : 3 steht.

10. Gespeichtes Fahrradrad nach einem der vorangehenden Ansprüche, **dadurch gekennzeichnet, dass** es eine Felge aufweist, bei welcher die Mittelebene der Verankerungsstellen der Speichen in der Felge von der Felgenmittelebene (M) seitlich versetzt ist.

11. Gespeichtes Fahrradrad nach einem der vorangehenden Ansprüche, welches konventionelle Nabenflansche mit parallel zur Radachse verlaufenden Speichenlöchem und konventionellen am Ende gebogenen Speichen mit einem Speichenkopf aufweist, **dadurch gekennzeichnet, dass** alle in einem Flansch verankerten Speichen in der Richtung von nur einer Flanschseite in den Flansch eingesteckt sind, wobei auch verschiedene Kombinationen dieser Richtungen auf einem Rad entstehen können.

12. Gespeichtes Fahrradrad nach einem der Ansprüche 1-10, **dadurch gekennzeichnet, dass** alle in einem Flansch verankerten Speichen abwechslungsweise von beiden Seiten eines Flansches in diesen eingesteckt sind.

13. Gespeichtes Fahrradrad nach Anspruch 12, **dadurch gekennzeichnet, dass** die Speichen an beiden Flanschen einer Nabe abwechslungsweise von beiden Seiten eingesteckt sind.

14. Gespeichtes Fahrradrad nach einem der vorhergehenden Ansprüchen, **dadurch gekennzeichnet, dass** alle Speichen an beiden Flanschseiten gekreuzt angeordnet sind.

15. Exzentrisch gespeichtes Fahrrad-Hinterrad nach einem der vorangehenden Ansprüche, **dadurch gekennzeichnet, dass** es eine Hinterradnabe aufweist, bei welcher die Distanz der Mittelebenen der Nabenflansche oder der Mittelebenen der anders ausgebildeten Verankerungsstellen der Speichen an den Seiten der Nabe (c + d), 58 oder mehr Millimeter beträgt.

16. Gespeichtes Fahrradrad nach einem der vorangehenden Ansprüche, **dadurch gekennzeichnet, dass** es auf der Nabe und/oder auf der Felge einen Aufkleber mit einem geeigneten Text aufweist, der auf die ungewohnte und für das Einspeichen und das Zentrieren des Rades wichtige Anordnung und Anzahl der Speichen an den Radseiten aufmerksam macht.

17. Ein Fahrrad mit wenigstens einem gespeichten Rad nach einem der vorangehenden Ansprüchen.

18. Verfahren zur Vereinheitlichung der Speichenspannung bei exzentrisch gespeichten Fahrrad-Rädern, indem die durchschnittliche Spannung der Speichen, welche von der Nabe an derjenigen Seite der Felgenmittelebene (M) in Richtung zur Felge führen, wo eine grössere gesamte Spannung der verankerten Speichen vorhanden ist, mit der durchschnittlichen Spannung der Speichen, welche von der Nabe an der gegenüberliegenden Seite der Felgenmittelebene (M) in Richtung zur Felge führen, wo eine niedrigere gesamte Spannung der verankerten Speichen vorhanden ist, soweit als erwünscht ausgeglichen wird, **indem** die Nabe an den einzelnen Seiten der Felgenmittelebene (M) mit entsprechender nicht gleicher Anzahl der verankerten Speichen versehen wird, und die Speichen an den einzelnen Seiten der Felgenmittelebene (M) in einem Speichenanzahlverhältnis 3 : 1 oder 5 : 2 oder 2 : 1 oder 7 : 4 oder 5 : 3 oder 3 : 2 oder 4 : 3 angeordnet werden, derart, dass das Verhältnis der durchschnittlichen Spannung der Speichen, welche von der Nabe an der einen Seite der Felgenmittelebene (M) in Richtung zur Felge führen und der durchschnittlichen Spannung der Speichen, welche von der Nabe an der anderen Seite der Felgenmittelebene (M) in Richtung zur Felge führen, von dem Verhältnis 1 : 1 um Null bis um plus oder minus 50 Prozent abweichen, und wobei die Speichen in der Felge gleichmässig beabstandet angeordnet werden.

## Claims

1. Spoked bicycle wheel consisting of a hub, which is connected by means of spokes under tension to a ring shaped rim, with an unequal number of spokes on the two sides of the wheel, in the case of which the center plane of the anchoring points of the spokes in the rim is laterally displaced from the center plane of the hub flanges or from the center plane of differently constructed anchoring points on the sides of the hub (F),
**characterized in that**
- the distances between the anchoring points of the spokes in the rim are equal,
- that a first ratio of a first number of spokes, which from the hub on that side of the center plane of the rim (M) leads in the direction towards the rim, on which a higher sum of the tensions of these spokes is present to a second number of spokes, which from the hub on the opposite side of the center plane (M) of the rim lead in the direction towards the rim, on which a lower sum of the tensions of the spokes is present is 3 : 1 or 5 : 2 or 2 : 1 or 7 : 4 or 5 : 3 or 3 : 2 or 4 : 3 and
- corresponds to a second ratio of the dimensional values c : d,
- and that the first ratio and the second ratio are in essentially equal to each other or diverge by a maximum of 50 percent from each other,
wherein:
c is measured between the radial center plane of the axes of the spokes anchored in the hub, which spokes lead from the hub on that side of the center plane (M) of the rim in the direction towards the rim where a lower total tension of these spokes is present, in the locations, where the spokes leave the hub and have only just reached the direction towards the rim and the radial center plane of the axes of all the spokes anchored in the rim, in those locations, in which the spokes leave the rim and have just reached the direction towards the hub and
d is the analogue value to c on the opposite side of the center plane (M) of the rim where a larger total tension of the spokes anchored in the hub is present,
whereby the average tension of the first number of spokes, which from the hub on the one side of the center plane (M) of the rim lead in the direction towards the rim and the average tension of the second number of spokes, which lead from the hub in the direction towards the rim on the opposite side of the center plane (M) of the rim are essentially equal or diverge by a maximum of 50 percent from each other.

2. Spoked bicycle wheel according to claim 1, **characterized in that**
the number of spokes, which from the hub on the one side of the center plane (M) of the rim lead in the direction towards the rim and the number of those spokes, which from the hub on the other side of the center plane (M) of the rim lead to the rim, is in the ratio of c : d, whereby
the average tension of the spokes which lead from the hub on the one side of the center plane (M) of the rim in the direction towards the rim and the average tension of those spokes which lead from the hub on the other side of the center plane (M) of the rim in the direction towards the rim is at a ratio of 1 : 1.

3. Spoked bicycle wheel according to claim 1, **characterized in that** the number of spokes, which from the hub on the one side of the center plane (M) of the rim lead in the direction towards the rim and the number of those spokes, which from the hub on the other side of the center plane (M) of the rim lead to the rim, is at a ratio of 3 : 1.

4. Spoked bicycle wheel according to claim 1, **characterized in that** the number of spokes, which from the hub on the one side of the center plane (M) of the rim lead in the direction towards the rim and the number of those spokes, which from the hub on the other side of the center plane (M) of the rim lead to the rim, is at a ratio of 5 : 2.

5. Spoked bicycle wheel according to claim 1, **characterized in that** the number of spokes, which from the hub on the one side of the center plane (M) of the rim lead in the direction towards the rim and the number of those spokes, which from the hub on the other side of the center plane (M) of the rim lead to the rim, is at a ratio of 2 : 1.

6. Spoked bicycle wheel according to claim 1, **characterized in that** the number of spokes, which from the hub on the one side of the center plane (M) of the rim lead in the direction towards the rim and the number of those spokes, which from the hub on the other side of the center plane (M) of the rim lead to the rim, is at a ratio of 7 : 4.

7. Spoked bicycle wheel according to claim 1, **characterized in that** the number of spokes, which from the hub on the one side of the center plane (M) of the rim lead in the direction towards the rim and the number of those spokes, which from the hub on the other side of the center plane (M) of the rim lead to the rim, is at a ratio of 5 : 3.

8. Spoked bicycle wheel according to claim 1, **characterized in that** the number of spokes, which from the hub on the one side of the center plane (M) of the rim lead in the direction towards the rim and the number of those spokes, which from the hub on the other side of the center plane (M) of the rim lead to the rim, is at a ratio of 3 : 2.

9. Spoked bicycle wheel according to claim 1, **characterized in that** the number of spokes, which from the hub on the one side of the center plane (M) of the rim lead in the direction towards the rim and the number of those spokes, which from the hub on the other side of the center plane (M) of the rim lead to the rim, is at a ratio of 4 : 3.

10. Spoked bicycle wheel according to any one of the preceding claims, **characterized in that** it comprises a rim, in which the center plane of the anchoring points of the spokes in the rim is laterally displaced from the center plane (M) of the rim.

11. Spoked bicycle wheel according to any one of the preceding claims, which comprises conventional hub flanges with spoke holes running in parallel to the axis of the wheel and conventional spokes bent at their ends and comprising a spoke head, **characterized in that** all spokes anchored in the flange are inserted into in the direction of only one flange side, whereby different combinations of these directions can be formed on a wheel.

12. Spoked bicycle wheel according to any one of the claims 1 to 10, **characterized in that** all spokes anchored in the flange are inserted into the flange from both sides of the flange in an alternating manner.

13. Spoked bicycle wheel according to claim 12, **characterized in that** all spokes anchored in both of the two flanges of a hub are inserted into the flanges from both sides in an alternating manner.

14. Spoked bicycle wheel according to any one of the preceding claims, **characterized in that** all spokes on both sides of a flange are arranged in a crossed manner.

15. Eccentrically spoked bicycle rear wheel according to any one of the preceding claims, **characterized in that** it comprises a rear wheel hub, in which the distance between the center planes of the hub flanges or between the center planes of otherwise designed anchoring points of the spokes on the sides of the hub (c + d), amounts to 58 or more millimeters.

16. Spoked bicycle wheel according to any one of the preceding claims, **characterized in that** it comprises a sticker on the hub and/or on the rim with an inscription of a suitable text, which draws attention to the unaccustomed, and for the spoking and centering of the wheel important, arrangement of the spokes on the sides of the wheel.

17. A bicycle with at least one spoked wheel according to any one of the preceding claims.

18. Method for the standardization of the spoke tensions in the case of eccentrically spoked bicycle wheels, in which the average tension of the spokes, which from the hub on that side of the center plane (M) of the rim lead in the direction towards the rim, where a greater overall tension of the anchored spokes is present, is equalized to such an extent as is desired with the average tension of those spokes, which from the hub on the opposite side of the center plane (M) of the rim lead in the direction towards the rim, where a lower overall tension of the anchored spokes is present, in that the hub on the individual sides of the center plane (M) of the rim is equipped with a correspondingly unequal number of anchored spokes, and that the number of spokes on the individual sides of the center plane (M) are arranged in a ratio of number of spokes of 3 : 1 or 5 : 2 or 2 : 1 or 7 : 4 or 5 : 3 or 3 : 2 or 4 : 3 in a manner such that the ratio of the average tension of the spokes, which from the hub on the one side of the center plane (M) of the rim lead in the direction towards the rim and the average tension of the spokes, which from the hub on the opposite side of the center plane (M) of the rim lead in the direction towards the rim diverges from the ratio 1 : 1 by zero or by plus or minus 50 percent, and wherein the spokes in the rim are equally distanced.

## Revendications

1. Roue de bicyclette à rayons, constituée d'un moyeu qui est relié sous tension par les rayons à une jante de forme annulaire,
avec un nombre différent de rayons sur les deux côtés de la roue,
dans laquelle le plan central des emplacements d'ancrage des rayons dans la jante est décalé latéralement par rapport au plan central des brides du moyeu ou par rapport au plan central des emplacements d'ancrage, configurés différemment, des rayons sur les côtés du moyeu (F),
**caractérisée en ce que**
les distances entre les emplacements d'ancrage des rayons dans la jante sont identiques,
**en ce qu'**un premier rapport entre un premier nombre de rayons qui conduisent du moyeu à la jante sur le côté du plan central (M) de la jante où la somme des tensions de ces rayons est plus élevée, et un deuxième nombre de rayons qui conduisent du moyeu à la jante du côté opposé du plan central (M) de la jante où la somme des tensions des rayons est plus petite, est compris entre 3:1 ou 5:2 ou 2:1 ou 7:4 ou 5:3 ou 3:2 ou 4:3 et
un deuxième rapport correspond à la dimension c:d
et **en ce que** le premier rapport et le deuxième rapport sont essentiellement identiques ou ne s'écartent l'un de l'autre que d'au plus 50 pourcent,
tandis que:
c est la distance entre le plan central radial des axes des rayons ancrés dans le moyeu et qui conduisent vers la jante sur le côté du plan central (M) de la jante où la tension totale de ces rayons est plus basse, aux emplacements où les rayons quittent le moyeu et ont pris la direction qui conduit à la jante et du plan central radial des axes de tous les rayons ancrés dans la jante aux emplacements où les rayons quittent la jante et ont pris la direction qui conduit au moyeu, et
d est la distance analogue à c sur le côté opposé du plan central (M) de la jante où la tension totale des rayons ancrés dans le moyeu est plus élevée,
grâce à quoi la tension moyenne du premier nombre de rayons qui conduisent du moyeu à la jante sur un côté du plan central (M) de la jante et la tension moyenne du deuxième nombre de rayons qui conduisent du moyeu à la jante de l'autre côté du plan central (M) de la jante sont essentiellement identiques ou ne diffèrent l'une de l'autre que d'au plus 50 pourcent.

2. Roue de bicyclette à rayons selon la revendication 1, **caractérisée en ce que** le nombre des rayons qui conduisent du moyeu à la jante sur l'un des côtés du plan central (M) de la jante et le nombre des rayons qui conduisent du moyeu à la jante de l'autre côté du plan central (M) de la jante sont dans un rapport c:d,
grâce à quoi la tension moyenne des rayons qui conduisent du moyeu à la jante sur l'un des côtés du plan central (M) de la jante et la tension moyenne des rayons qui conduisent du moyeu à la jante de l'autre côté du plan central (M) de la jante forment un rapport de 1:1.

3. Roue de bicyclette à rayons selon la revendication 1, **caractérisée en ce que** le nombre de rayons qui conduisent du moyeu à la jante sur un des côtés du plan central (M) de la jante et le nombre de rayons qui conduisent du moyeu à la jante sur l'autre côté du plan central (M) de la jante forment un rapport de 3:1.

4. Roue de bicyclette à rayons selon la revendication 1, **caractérisée en ce que** le nombre des rayons qui conduisent du moyeu à la jante sur l'un des côtés du plan central (M) de la jante et le nombre des rayons qui conduisent du moyeu à la jante sur l'autre côté du plan central (M) de la jante forment un rapport de 5:2.

5. Roue de bicyclette à rayons selon la revendication 1, **caractérisée en ce que** le nombre des rayons qui conduisent du moyeu à la jante sur l'un des côtés du plan central (M) de la jante et le nombre des rayons qui conduisent du moyeu à la jante sur l'autre côté du plan central (M) de la jante forment un rapport de 2:1.

6. Roue de bicyclette à rayons selon la revendication 1, **caractérisée en ce que** le nombre des rayons qui conduisent du moyeu à la jante sur l'un des côtés du plan central (M) de la jante et le nombre des rayons qui conduisent du moyeu à la jante sur l'autre côté du plan central (M) de la jante forment un rapport de 7.4.

7. Roue de bicyclette à rayons selon la revendication 1, **caractérisée en ce que** le nombre des rayons qui conduisent du moyeu à la jante sur l'un des côtés du plan central (M) de la jante et le nombre des rayons qui conduisent du moyeu à la jante sur l'autre côté du plan central (M) de la jante forment un rapport de 5:3.

8. Roue de bicyclette à rayons selon la revendication 1, **caractérisée en ce que** le nombre des rayons qui conduisent du moyeu à la jante sur l'un des côtés du plan central (M) de la jante et le nombre des rayons qui conduisent du moyeu à la jante sur l'autre côté du plan central (M) de la jante forment un rapport de 3:2.

9. Roue de bicyclette à rayons selon la revendication 1, **caractérisée en ce que** le nombre des rayons qui conduisent du moyeu à la jante sur l'un des côtés du plan central (M) de la jante et le nombre des rayons qui conduisent du moyeu à la jante sur l'autre côté du plan central (M) de la jante forment un rapport de 4:3.

10. Roue de bicyclette à rayons selon l'une des revendications précédentes, **caractérisée en ce qu'**elle présente une jante dans laquelle le plan central des emplacements d'ancrage des rayons dans la jante est décalé latéralement par rapport au plan central (M) de la jante.

11. Roue de bicyclette à rayons selon l'une des revendications précédentes, qui présente des brides de moyeu classiques avec des trous à rayons qui s'étendent parallèlement à l'axe de la roue et des rayons classiques à extrémité recourbée et tête de rayon, **caractérisée en ce que** tous les rayons ancrés dans une bride sont enfichés dans la bride en direction d'un seul côté de la bride, des combinaisons différentes de ces directions pouvant également être réalisées sur une roue.

12. Roue de bicyclette à rayons selon l'une des revendications 1 à 10, **caractérisée en ce que** tous les rayons ancrés dans une bride sont enfichés dans celle-ci en alternance par les deux côtés d'une bride.

13. Roue de bicyclette à rayons selon la revendication 12, **caractérisée en ce que** les rayons sont enfichés sur les deux brides d'un moyeu en alternance par les deux côtés.

14. Roue de bicyclette à rayons selon l'une des revendications précédentes, **caractérisée en ce que** tous les rayons sont disposés en croix sur les deux côtés de la bride.

15. Roue arrière décentrée à rayons pour bicyclette, selon l'une des revendications précédentes, **caractérisée en ce qu'**elle présente un moyeu de roue arrière dans lequel la distance entre les plans central des brides du moyeu ou les plans central des emplacements d'ancrage, de configurations différentes, des rayons, sur les côtés du moyeu (c+d), vaut 58 millimètres ou plus.

16. Roue de bicyclette à rayons selon l'une des revendications précédentes, **caractérisée en ce que** sur le moyeu et/ou sur la jante, elle présente une étiquette sur laquelle est inscrit un texte qui indique aux personnes non expérimentées l'agencement et le nombre des rayons sur les côtés de la roue, essentiels pour la pose des rayons et le centrage de la roue.

17. Bicyclette dotée d'au moins une roue à rayons selon l'une des revendications précédentes.

18. Procédé de normalisation de la tension des rayons sur des roues excentrées à rayons pour bicyclette, dans lequel la tension moyenne des rayons qui conduisent du moyeu à la jante sur le côté du plan central (M) de la jante où la tension globale des rayons ancrés est la plus élevée est équilibrée de la manière souhaitée par rapport à la tension moyenne des rayons qui conduisent du moyeu à la jante sur le côté opposé du plan central (M) de la jante où la tension globale des rayons ancrés est plus basse, en dotant le moyeu de nombres appropriés, non identiques, de rayons ancrés sur les côtés individuels du plan central (M) de la jante, les rayons étant disposés sur les côtés individuels du plan central (M) de la jante dans un rapport entre les nombres de rayons de 3:1 ou de 5:1 ou de 2:1 ou de 7:4 ou de 5:3 ou de 3:2 ou de 4:3, de telle sorte que le rapport entre la tension moyenne des rayons qui conduisent du moyeu à la jante sur un des côtés du plan central (M) de la jante et la tension moyenne des rayons qui conduisent du moyeu à la jante sur l'autre côté du plan central (M) de la jante s'écarte du rapport 1:1 de 0 à plus ou moins 50 pourcent, les rayons étant disposés à intervalles réguliers dans la jante.
